# EUROPÄISCHE PATENTSCHRIFT

(11) **EP 1 565 663 B1**
(45) Veröffentlichungstag und Bekanntmachung des Hinweises auf die Patenterteilung: **14.04.2010**
(21) Anmeldenummer: 03758049.5
(22) Anmeldetag: 24.10.2003
(51) Int. Cl.: F16C 19/52, F16C 33/80, F16C 17/24

(54) **Turbomolekularvakuumpumpe**
Turbomolecular vacuum pump
Pompe à vide turbomoléculaire

(30) Priorität: 29.11.2002 DE 10256086
(43) Veröffentlichungstag der Anmeldung: 24.08.2005
(73) Patentinhaber: Leybold Vakuum GmbH, 50968 Köln (DE)
(72) Erfinder: ENGLÄNDER, Heinrich, 52441 Linnich (DE); VÖLKER, Karl-Heinz, 52445 Titz (DE); SCHULZ, Wolfgang, Beeton, Ontario LOG 1AO (CA)
(74) Vertreter: Leineweber, Jürgen
(86) Internationale Anmeldenummer: PCT/EP2003/011770
(87) Internationale Veröffentlichungsnummer: WO 2004/051102

(56) Entgegenhaltungen:
- EP-A- 0 335 391
- DE-A- 2 707 352
- US-A- 4 788 758
- US-A- 5 894 378

## Beschreibung

Die Erfindung betrifft eine Turbomolekularvakuumpumpe, mit den Merkmalen des Oberbegriffs des Patentanspruchs 1.

Eine Turbomolekularpumpe dieser Art ist aus der DE 2 428 256 Al bekannt. Sie besitzt einen Rotor und einen Stator, jeweils mit pumpaktiven Flächen. Der Rotor stützt sich auf einer Welle ab, die ihrerseits in Lagern drehbar gelagert ist. Bei einem Versagen eines Lagers kommt es zu einer Berührung der pumpaktiven Flächen, was in aller Regel zu einem Rotor-Crash führt.

Kugellager der genannten Art dienen der Halterung und Führung drehbarer Maschinenbauteile, in der Regel Wellen. Der Außenring - bei inversen Lagern auch der Innenring - stützt sich auf ein ortsfestes Bauteil (Lagerscheibe, Gehäuse oder dgl.) ab. In aller Regel handelt es sich bei Lagern dieser Art um öl- oder fettgeschmierte Lager. Die Anwendung der Erfindung bei fettfreien Lagern ist ebenfalls möglich. Die Erfindung ist ebenso unabhängig davon, ob die Lager mit oder ohne Käfig ausgeführt sind.

Aus den Schriften DE 27 07 352 A, EP 335 391 A, US 5 894 378 A und FR 1 464 889 A sind Lagerungen für Maschinen bekannt, die mit zeitweise in Aktion tretenden Hilfslagern ausgerüstet sind. Die Hilfslager bewirken, dass erhöhte Belastungen des eigentlichen Lagers (Hauptlagers) nicht auftreten und damit deren Zerstörung vermieden wird. Zur Bildung des Hilfslagers werden Teile der Laufringe des Hauptlagers eingesetzt. Die Hilfslager sind vorzugsweise geschmiert. Sie sollen möglichst keinen Einfluss auf die Betriebsdrehzahl haben.

Der vorliegenden Erfindung liegt die Aufgabe zugrunde, eine Turbomolekularvakuumpumpe der eingangs genannten Art so auszubilden, dass für den Fall des Versagens der Lagerung und Führung des rotierenden Bauteils Schäden an bzw. in der Maschine vermieden werden.

Erfindungsgemäß wird diese Aufgabe durch die Merkmale und Maßnahmen der Patentansprüche gelöst.

Dadurch, dass der Spalt zwischen den einander gegenüberliegenden Flächen relativ klein ist, übernehmen sie bei unkontrollierten Bewegungen der rotierenden Einheit die Funktion von Notlaufflächen. Die rotierende Einheit wird in einem einmaligen Notlauf bis zum Stillstand geführt, ohne dass es zu einem Rotor-Crash kommt. Die bei einem Notlauf erzeugte Reibung ist so hoch, dass die installierte Antriebsleistung nicht mehr ausreicht. Der Wandler des Antriebs schaltet auf Störung, so dass der Stillstand schnell erreicht wird.

Weitere Vorteile und Einzelheiten der Erfindung sollen anhand von in den Figuren 1 bis 5 darstellten Ausführungsbeispielen erläutert werden. Es zeigen
- Figuren 1 bis 4 Kugellager mit unterschiedlich gestalteten Notlaufflächen und
- Figur 5 eine Reibungsvakuumpumpe mit Notlauflagern der erfindungsgemäßen Art.

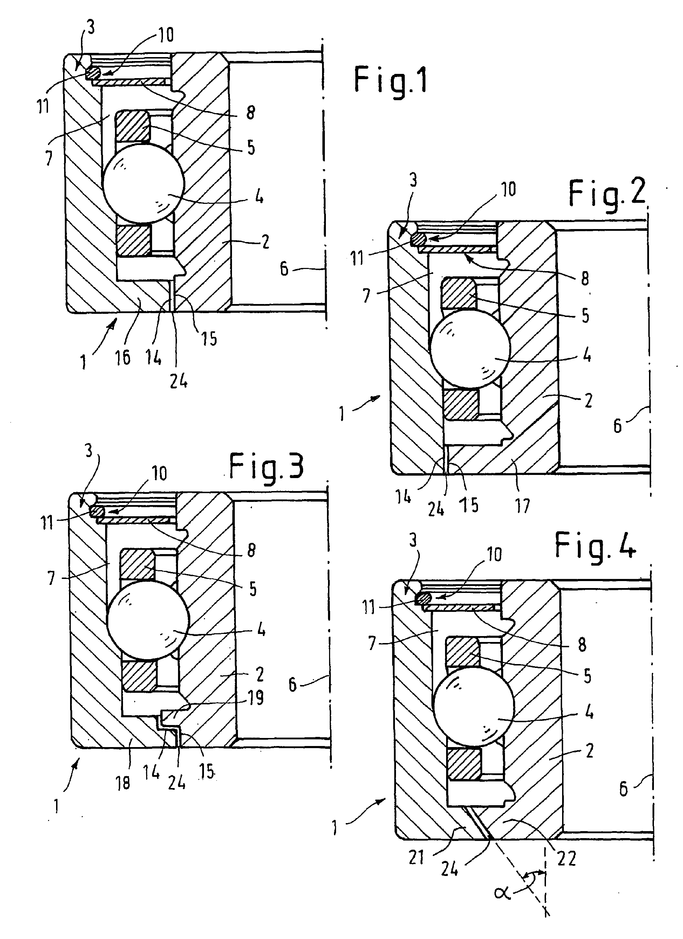

Die in den Figuren 1 bis 4 dargestellten Lager 1 weisen jeweils einen Lagerinnenring 2, einen Lageraußenring 3, Kugeln 4 und einen Käfig 5 auf. Die Achse des Lagers 1 ist jeweils mit 6 bezeichnet. In axialer Richtung (in den Figuren 1 bis 4 jeweils oben) ist der Innenraum 7 des Kugellagers 1 von einem Lagerdeckel 8 weitgehend abgeschlossen, und zwar mit einem Sprengring 10, der in einer Innennut 11 im Lageraußenring 3 eingespannt ist.

Üblicherweise sind auf beiden Seiten der Kugeln 4 Lagerdeckel dieser Art vorgesehen.

Um die erfindungsgemäßen Notlaufflächen 14, 15 zu bilden, sind ein oder beide Lagerringe 2, 3 mit ringförmigen Vorsprüngen ausgerüstet, die - wenn sie auf der dem Lagerdeckel 8 gegenüberliegenden Seite - angeordnet sind, gleichzeitig die Funktion eines zweiten Lagerdeckels 8 haben. Bei der Lösung nach Figur 1 besitzt der Lageraußenring 3 auf seiner dem Lagerdeckel 8 gegenüberliegenden Seite einen sich in Richtung Innenring 2 erstreckenden Vorsprung 16. Seine Innenfläche bildet eine in Bezug auf die Achse 6 zylindrische Notlauffläche 14. Der dieser Fläche 14 gegenüberliegende Teil der Außenfläche des Innenringes 2 ist die zweite Notlauffläche 15.

Bei der Lösung nach Figur 2 ist der Innenring 2 mit einem sich radial nach außen erstreckenden Vorsprung 17 ausgerüstet. Seine Außenfläche und ein Teil der Innenfläche des Außenringes 3 bilden ebenfalls zylindrische Notlaufflächen 14,15.

Bei den Lösungen nach Figur 3 und 4 sind Lagerinnenring 2 und Lageraußenring 3 mit den Vorsprüngen 18,19 bzw. 21,22 ausgerüstet. Die einander gegenüberliegenden Notlaufflächen 14,15 sind im Querschnitt stufenförmig (Fig. 3) bzw. bilden mit der Achse 6 den Winkel α. Dadurch werden Notlaufflächen geschaffen, die nicht nur bei einem Versagen der radialen, sondern auch der axialen Führung des rotierenden Systems durch die Lager wirksam werden.

Die Größe des Spaltes 24 zwischen den Notlaufflächen 14,15 sollte möglichst klein sein. Er darf jedoch die zulässigen Lagertoleranzen nicht unterschreiten. Die Tatsache, dass die Lagertoleranzen in radialer und in axialer Richtung häufig unterschiedlich sind, muss bei der Wahl der Spaltgröße berücksichtigt werden.

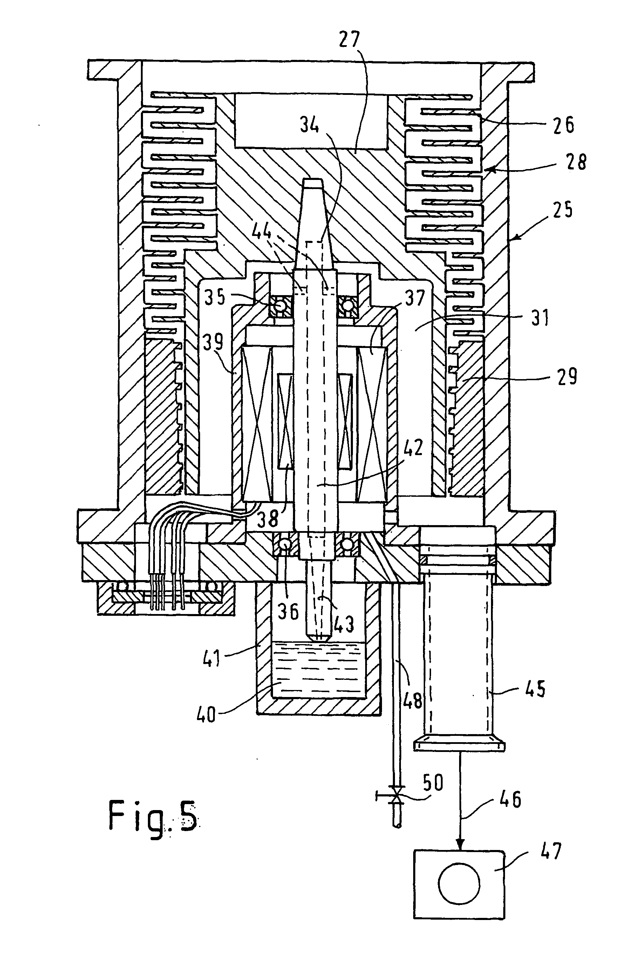

Figur 5 zeigt als Beispiel für eine Reibungsvakuumpumpe eine Turbomolekularpumpe 25, deren Stator mit 26 und deren Rotor mit 27 bezeichnet ist. Sie ist als Compoundpumpe ausgebildet und besitzt eine mit Flügeln bestückte Turbomolekularpumpstufe 28 und eine mit einem Gewinde ausgerüstete Molekularpumpstufe 29. Der Rotor 27 ist teilweise glockenförmig ausgebildet. Innerhalb bzw. etwas unterhalb des von der Glocke umfaßten Raumes 31 ist der Rotor über die Welle 34 in den Lagern 35 und 36 drehbar gelagert. Außerdem ist innerhalb des Raumes 31 der Antriebs-Elektromotor untergebracht, dessen Statorpaket mit 37 und dessen Rotorpaket mit 38 bezeichnet ist. Die Lager 35, 36 und der Rotorstator 37 stützen sich auf einen hülsenförmigen Träger 39 ab.

Zur Versorgung der Lager 35 und 36 mit einem Schmiermittel ist unterhalb der Turbomolekularpumpe 31 ein mit Öl 40 gefüllter Behälter 41 befestigt. Die Antriebswelle 34, die mit ihrem unteren Ende in das Öl eintaucht, weist eine innere Koaxialbohrung 42 auf, die infolge des sich nach oben konisch erweiternden unteren Bereiches 43 eine Förderung des Schmieröls nach oben bewirkt. Durch die Querbohrungen 44 gelangt das Öl zunächst zum oberen Lager 35 und fließt dort infolge Schwerkraft durch das untere Lager 36 in den Ölbehälter zurück.

Über den Vorvakuumstutzen 45 und die Leitung 46 ist die Turbomolekularpumpe 31 mit der Vorvakuumpumpeinrichtung 47 verbunden. Da zwischen dem Motor-/Lagerraum 31 und dem Vorvakuumstutzen 45 eine Verbindung besteht, herrscht auch im Raum 31 der für den Betrieb der Turbomolekularpumpe erforderliche Vorvakuumdruck. Um zu verhindern, dass von der Turbomolekularpumpe geförderte korrosive Gase in den Lagerraum 31 gelangen, ist eine Sperrgaseinrichtung vorgesehen, die zunächst das in den Lagerraum mündende Gaseinlaßrohr 48 umfaßt. Zum dosierten Einlassen des Sperrgases weist es ein Ventil 50 auf. Das in den Motor-/Lagerraum 31 gelangende Sperrgas (z.B. N₂) durchströmt den Motor sowie das obere Lager 35 und gelangt außerhalb des Lagerträgers 39 zum Auslaßstutzen 45. Das Eindringen von korrosiven Gasen, die von der Turbomolekularpumpe 25 gefördert werden, in den Motor-/Lagerraum 31 wird dadurch verhindert.

Im Rahmen der Erfindung ist/sind ein oder beide Lager 35, 36 so ausgebildet(im einzelnen nicht dargestellt), wie es in einer der Figuren 1 bis 4 dargestellt ist. Ein Vorteil dieser Maßnahme liegt darin, dass es beim Versagen eines Lagers nicht zu einer Beschädigung der pumpaktiven Flächen (Schaufeln des Rotors/Stators, Gewinde) kommt. Der Spalt 2 4 zwischen den Notlaufflächen 14, 15 bestimmt bei einem Versagen der Lagerung die maximale Auslenkung des Rotors 27 aus seiner Solllage. Dementsprechend eng können auch die Abstände der pumpaktiven Flächen gewählt werden. Je kleiner diese Abstände sind, desto besser sind die Eigenschaften der Pumpe. Weiterhin hat die Tatsache, dass sich zwischen den Lagerringen 2, 3 zumindest des Lagers 35 ein enger, relativ langer Spalt 24 befindet, den Vorteil einer erheblichen Reduzierung der Rate der das Lager durchströmenden Sperrgase. Schließlich erlauben die Vorsprünge an den Lagerringen 2, 3 größere Auflageflächen, die eine Verbesserung der Wärmeabfuhr aus dem Lager bewirken.

Der Spalt 24 ist den Lagertoleranzen entsprechend zu wählen. Bei Pumpen der beschriebenen Art ist die Spaltweite zweckmäßig kleiner 0,1, vorzugsweise kleiner 0,05 mm. Die Größe der Notlaufflächen wird bestimmt durch die axiale Ausdehnung des Spaltes. Sie sollte nicht unter 1,5 mm liegen, bei geneigten oder stufenförmig ausgebildeten Notlaufflächen entsprechend größer.

Von Bedeutung ist, dass die im Fall des Versagens eines. Lagers von den Notlaufflächen 14, 15 erzeugte Reibung hoch ist, damit der Antrieb des rotierenden Systems auf Störung schaltet. Das Reibverhalten der Notlaufflächen 14, 15 hängt vom Werkstoff ab (zweckmäßig gehärteter Wälzlagerstahl). Durch eine Beschichtung einer oder beider Notlaufflächen (z. B. mit MoS₂' Teflon) kann nicht nur die Reibung erhöht sondern auch die Fressneigung der gegebenen Materialpaarung reduziert werden.

## Patentansprüche

1. Turbomolekularvakuumpumpe (25) mit einem Stator (26) und einem Rotor (27), der sich über eine Welle (34) auf Kugellagern (35, 36) mit jeweils einem rotierenden Lagerinnenring (2) und einem feststehenden Lageraußenring (3) abstützt, und mit einem Antrieb (37, 38) für den Rotor, der bei einer Erhöhung der Antriebsleistung um einen bestimmten Betrag auf Störung schaltet, wobei Stator (26) und Rotor (27) mit pumpaktiven Flächen ausgerüstet ist,
**dadurch gekennzeichnet,**
**dass** mindestens ein Lager (35, 36) die folgenden Merkmale aufweist:
- das Lager weist zur Drehachse (6) konzentrische Flächen (14, 15) auf, von denen eine Bestandteil des rotierenden Lagerringes und die andere Bestandteil des ortsfesten Lagerringes ist,
- die Flächen (14, 15) liegen einander während des Normalbetriebs mit relativ engem Spalt (24) gegenüber,
- die Flächen (14, 15) haben die Funktion eines Notlauflagers,
- für den Fall des Versagens des Kugellagers übernehmen die Flächen (14, 15) des Notlauflagers die Halterungs- und Führungsfunktion der defekten Lagerung während eines einmaligen Notlaufs bis zum Stillstand des Rotors (27),
- die Größe des Spaltes (24) ist so gewählt, dass sich die einander gegenüber liegenden Flächen (14, 15) während des Normalbetriebs nicht berühren,
- die Größe des Spaltes (24) ist so gewählt, dass sich die einander gegenüberliegenden Flächen während eines Notlaufs berühren, wobei es nicht zu einer Beschädigung der pumpaktiven Flächen kommt,
- der Werkstoff der Oberflächen der Notlaufflächen (14, 15) ist so gewählt ist, dass der Antrieb des rotierenden Systems die bei einem Notlauf erzeugte Reibung nicht mehr überwinden kann und auf Störung schaltet.

2. Turbomolekularvakuumpumpe nach Anspruch 1, **dadurch gekennzeichnet, dass** sich die konzentrischen Flächen (14, 15)axial erstrecken.

3. Turbomolekularvakuumpumpe nach Anspruch 1, **dadurch gekennzeichnet, dass** die konzentrischen Flächen (14, 15) im Querschnitt die Form einer Stufe haben.

4. Turbomolekularvakuumpumpe nach Anspruch 1, **dadurch gekennzeichnet, dass** sich die konzentrischen Flächen (14, 14) zur Achse (6) des Lagers geneigt erstrecken.

5. Turbomolekularvakuumpumpe nach einem der Ansprüche 1 bis 4, **dadurch gekennzeichnet, dass** die vorsprünge (14, 15) gleichzeitig die Funktion eines Lagerdeckels haben.

6. Turbomolekularvakuumpumpe nach einem der vorhergehenden Ansprüche, **dadurch gekennzeichnet, dass** der Spalt zwischen den Notlaufflächen < 0,1 mm, vorzugsweise < 0,05 mm ist.

7. Turbomolekularvakuumpumpe nach einem der Ansprüche 1 bis 6, **dadurch gekennzeichnet, dass** es sich bei dem Werkstoff für die Notlaufflächen (14, 15) um Stahl, vorzugsweise gehärteten Wälzlagerstahl, handelt.

8. Turbomolekularvakuumpumpe nach einem der Ansprüche 1 bis 7, **dadurch gekennzeichnet, dass** zumindest eine der beiden Notlaufflächen (14, 15) beschichtet ist.

9. Turbomolekularvakuumpumpe nach Anspruch 8, **dadurch gekennzeichnet, dass** zumindest eine der Notlaufflächen (14,15) mit MOS₂ oder Teflon beschichtet ist.

10. Turbomolekularvakuumpumpe nach einem der Ansprüche 1 bis 8, **dadurch gekennzeichnet, dass** sie mit einer Sperrgaseinrichtung ausgerüstet ist.

## Claims

1. Turbomolecular vacuum pump (25) having a stator (26) and a rotor (27) which is supported by means of a shaft (34) on ball bearings (35, 36) by means of a rotating inner ring (2) of the bearing and a fixed outer ring (3) of the bearing, respectively, and having for the rotor a drive (37, 38) which, when the drive power is increased by a specific amount, switches to malfunction mode, the stator (26) and the rotor (27) being provided with pump-active surfaces,
**characterised in that**
at least one bearing (35, 36) has the following features:
- the bearing has surfaces (14, 15) which are concentric relative to the rotation axis (6) and one of which is an integral component of the rotating bearing ring and the other of which is an integral component of the fixed bearing ring,
- the surfaces (14, 15) face each other with a relatively narrow gap (24) during normal operation,
- the surfaces (14, 15) act as an emergency bearing,
- in the event of failure of the ball-bearing, the surfaces (14, 15) of the emergency bearing assume the retaining and guiding function of the defective bearing during a single emergency operation until the rotor (27) comes to a stop,
- the size of the gap (24) is selected in such a manner that the mutually facing surfaces (14, 15) do not come into contact during normal operation,
- the size of the gap (24) is selected in such a manner that the mutually facing surfaces come into contact during an emergency operation, the pump-active surfaces not being damaged,
- the material of the surfaces of the emergency operation surfaces (14, 15) is selected in such a manner that the drive of the rotating system can no longer overcome the friction produced during an emergency operation and switches to malfunction mode.

2. Turbomolecular vacuum pump according to claim 1, **characterised in that** the concentric surfaces (14, 15) extend axially.

3. Turbomolecular vacuum pump according to claim 1, **characterised in that** the concentric surfaces (14, 15) are of step-like form in cross-section.

4. Turbomolecular vacuum pump according to claim 1, **characterised in that** the concentric surfaces (14, 14) extend in an inclined manner relative to the axis (6) of the bearing.

5. Turbomolecular vacuum pump according to any one of claims 1 to 4, **characterised in that** the projections (14, 15) at the same time act as a bearing cover.

6. Turbomolecular vacuum pump according to any one of the preceding claims, **characterised in that** the gap between the emergency operation surfaces is < 0.1 mm, preferably < 0.05 mm.

7. Turbomolecular vacuum pump according to any one of claims 1 to 6, **characterised in that** the material for the emergency operation surfaces (14, 15) is steel, preferably hardened roller bearing steel.

8. Turbomolecular vacuum pump according to any one of claims 1 to 7, **characterised in that** at least one of the two emergency operation surfaces (14, 15) is coated.

9. Turbomolecular vacuum pump according to claim 8, **characterised in that** at least one of the emergency operation surfaces (14, 15) is coated with MoS₂ or Teflon.

10. Turbomolecular vacuum pump according to any one of claims 1 to 8, **characterised in that** it is provided with a seal gas device.

## Revendications

1. Pompe à vide turbomoléculaire (25) avec un stator (26) et un rotor (27) qui prend appui par l'intermédiaire d'un arbre (34) sur des roulements à billes (35, 36) avec respectivement une bague de roulement intérieure rotative (2) et une bague de roulement extérieure fixe (3), et avec un dispositif d'entraînement (37, 38) pour le rotor qui commute sur dérangement lorsque la puissance d'entraînement augmente d'une certaine quantité, dans lequel le stator (26) et le rotor (27) sont munis de faces à pompage actif,
**caractérisée en ce qu'**au moins un roulement (35, 36) présente les particularités suivantes :
- le roulement présente des faces (14, 15) concentriques par rapport à l'axe de rotation (6) dont l'une fait partie de la bague de roulement rotative et l'autre fait partie de la bague de roulement stationnaire,
- en fonctionnement normal, les faces (14, 15) sont situées à l'opposé l'une de l'autre avec un intervalle (24) relativement réduit,
- les faces (14, 15) servent de roulement de secours,
- en cas de défaillance du roulement à billes, les faces (14, 15) du roulement de secours prennent en charge la fonction de maintien et de guidage du système de roulement défectueux au cours d'un cycle de secours unique jusqu'à l'arrêt du rotor (27),
- la dimension de l'intervalle (24) est sélectionnée de telle sorte que les faces (14, 15) opposées l'une à l'autre ne se touchent pas en fonctionnement normal,
- la dimension de l'intervalle (24) est sélectionnée de telle sorte que les faces opposées l'une à l'autre se touchent pendant un cycle de secours au cours duquel aucun endommagement des faces à pompage actif n'est occasionné,
- le matériau des surfaces des faces de secours (14, 15) est sélectionné de telle sorte que le dispositif d'entraînement du système rotatif ne peut plus surmonter la friction générée par un cycle de secours et commute sur dérangement.

2. Pompe à vide turbomoléculaire selon la revendication 1, **caractérisée en ce que** les faces concentriques (14, 15) s'étendent axialement.

3. Pompe à vide turbomoléculaire selon la revendication 1, **caractérisée en ce que** les faces concentriques (14, 15) ont en section transversale la forme d'un gradin.

4. Pompe à vide turbomoléculaire selon la revendication 1, **caractérisée en ce que** les faces concentriques (14, 15) s'étendent de façon inclinée par rapport à l'axe (6) du roulement.

5. Pompe à vide turbomoléculaire selon l'une quelconque des revendications 1 à 4, **caractérisée en ce que** les saillies (14, 15) ont en même temps la fonction d'un couvercle de roulement.

6. Pompe à vide turbomoléculaire selon l'une quelconque des revendications précédentes, **caractérisée en ce que** l'intervalle entre les faces de secours mesure < 0,1 mm, de préférence < 0,05 mm.

7. Pompe à vide turbomoléculaire selon l'une quelconque des revendications 1 à 6, **caractérisée en ce que** le matériau pour les faces de secours (14, 15) est de l'acier, de préférence de l'acier de roulement trempé.

8. Pompe à vide turbomoléculaire selon l'une quelconque des revendications 1 à 7, **caractérisée en ce qu'**au moins l'une des deux faces de secours (14, 15) présente un revêtement.

9. Pompe à vide turbomoléculaire selon la revendication 8, **caractérisée en ce qu'**au moins l'une des faces de secours (14, 15) présente un revêtement en MOS₂ ou en Téflon.

10. Pompe à vide turbomoléculaire selon l'une quelconque des revendications 1 à 8, **caractérisée en ce qu'**elle est équipée d'un dispositif de gaz d'arrêt.
